(19) Europäisches Patentamt
European Patent Office
Office européen des brevets

(11) **EP 2 553 841 B1**

(12) **FASCICULE DE BREVET EUROPEEN**

(45) Date de publication et mention
de la délivrance du brevet:
**20.08.2014 Bulletin 2014/34**

(21) Numéro de dépôt: **11715593.7**

(22) Date de dépôt: **24.03.2011**

(51) Int Cl.:
*H04B 10/079* (2013.01)    *H04B 10/299* (2013.01)

(86) Numéro de dépôt international:
**PCT/FR2011/050628**

(87) Numéro de publication internationale:
**WO 2011/121213 (06.10.2011 Gazette 2011/40)**

(54) **DISPOSITIF ET PROCÉDÉ DE TRAITEMENT D'UN SIGNAL OPTIQUE**

VORRICHTUNG UND VERFAHREN ZUR VERARBEITUNG EINES OPTISCHEN SIGNALS

DEVICE AND METHOD FOR PROCESSING AN OPTICAL SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2010 FR 1052276**

(43) Date de publication de la demande:
**06.02.2013 Bulletin 2013/06**

(73) Titulaires:
• **CNRS (Centre National De Recherche Scientifique)**
**75794 Paris Cedex 16 (FR)**
• **Université De Bourgogne**
**21078 Dijon (FR)**

(72) Inventeurs:
• **FINOT, Christophe**
**F-21000 Dijon (FR)**

• **FATOME, Julien**
**F-21130 Auxonne (FR)**

(74) Mandataire: **Gevers France**
**41, avenue de Friedland**
**75008 Paris (FR)**

(56) Documents cités:
**FR-A1- 2 776 132      US-A1- 2005 220 388**
**US-A1- 2008 231 945**

• **VU VAN SAN: "SENSITIVITY OF 10 GBIT/S OPTICALLY AMPLIFIED RECEIVER WITH SINGAL WAVEFORM VARIATION", JOURNAL OF OPTICAL COMMUNICATIONS, FACHVERLAG SCHIELE & SCHON, BERLIN, DE, vol. 22, no. 6, 1 décembre 2001 (2001-12-01), pages 210-214, XP001161803, ISSN: 0173-4911**

## Description

La présente invention concerne un dispositif et un procédé de traitement d'un signal optique dont la puissance varie de manière aléatoire dans une plage de variation de puissance autour d'une puissance moyenne.

Dans le domaine de l'optique ultra-rapide, on fait ici référence aux signaux à impulsions très brèves, les performances d'un signal optique, émis sous la forme d'un train d'impulsions par une source laser impulsionnelle, sont susceptibles d'être influencées notamment par deux facteurs : les variations d'amplitude (ou de puissance) et les variations temporelles du signal.

Dans ces conditions, la connaissance des variations de puissance d'un signal optique, dont le rapport à la puissance moyenne du signal est généralement dénommé gigue relative d'amplitude (« amplitude jitter ») ou gigue relative de puissance (« power jitter ») est d'une importance primordiale en vue de caractériser une source ultra-brève (picoseconde ou femtoseconde), à la fois en termes de qualité et de stabilité, pour des applications telles que les télécommunications optiques, mais également pour tout type d'application où la stabilité du signal est un critère primordial (génération de supercontinuum, métrologie, etc.).

Afin de déterminer cette gigue relative d'amplitude, il est connu de procéder à un traitement du signal optique, traitement qui consiste en une mesure électronique de la puissance d'au moins une partie temporelle du signal optique. Pour cela, une photodiode reçoit le signal optique et le convertit en signal électrique, avec une cadence adaptée au taux de répétition des impulsions (dans le cas d'un signal pulsé) ou encore à un taux de répétition de mesure prédéterminé, puis ce signal électrique est directement analysé. La gigue relative d'amplitude optique est ainsi transformée en gigue relative d'amplitude électrique, cette dernière pouvant alors être facilement quantifiée par des moyens usuels, tels qu'un oscilloscope numérique à échantillonnage éventuellement muni d'outils d'analyse informatique.

De par sa nature électronique, cette solution offre une certaine flexibilité en termes d'exploitation des données. En effet, elle rend possible de visualiser de façon synthétique la gigue mesurée, par exemple représentée sous la forme d'un « diagramme de l'oeil » pour lequel les différentes parties mesurées du signal sont resynchronisées et superposées, le niveau d'épaisseur représenté sur le diagramme indiquant directement la plage de variation de puissance du signal. Il est également possible, grâce à une telle mesure électronique, d'établir une analyse statistique de la variation d'amplitude du signal à partir d'histogrammes, ce qui permet de remonter à une information plus fine sur la variation relative d'amplitude dudit signal, à savoir la loi de densité de probabilité de la puissance.

Un tel dispositif de mesure électronique convient parfaitement pour l'analyse d'un signal optique présentant une gigue relative de puissance qui soit au moins modérée (sensiblement supérieure à 20%), voire importante, ce qui est le cas de trains d'impulsions dégradés par une transmission optique sur une longue distance. Ce dispositif est, à ce titre, couramment utilisé pour évaluer des facteurs de qualité dans le domaine des télécommunications optiques.

Toutefois, ce dispositif souffre d'un inconvénient majeur lorsqu'il s'agit de mesurer un faible niveau de gigue relative de puissance. En effet, comme tout type de traitement appliqué à un signal optique, celui-ci génère un bruit de traitement indépendant du signal optique. Dans le cas particulier d'un dispositif de mesure électronique, la photodiode et son électronique associée engendrent des variations relatives d'amplitude, dont l'ordre de grandeur est généralement compris entre 2 et 5%. Du fait du caractère aléatoire de ce bruit de traitement et de la variation relative de puissance intrinsèque au signal optique, ceux-ci se combinent de façon aléatoire, si bien que la gigue optique initiale peut être brouillée au sein du bruit de traitement lorsque ceux-ci présentent des ordres de grandeur sensiblement proches. Pour cette raison, le recours à une mesure électronique pour un signal à faible gigue relative d'amplitude ne saurait être pertinent.

Il va de soi qu'un tel inconvénient peut être surmonté en utilisant un dispositif électronique de plus grande stabilité, pour lequel le bruit de traitement généré est plus faible, ce qui ne peut néanmoins être réalisé qu'au détriment d'un important surcoût.

Pour éliminer l'influence du bruit de traitement électronique, il est connu de procéder à une analyse radio-fréquence du signal, comme décrit par exemple dans la publication « Characterization of the noise in continuously operating mode-locked lasers » (D. Von der Linde, Appl. Phys. B 39, 201-217, 1986). Pour y parvenir, on utilise un photodétecteur adéquat, que l'on adjoint à un analyseur de spectre électronique en vue d'analyser les propriétés spectrales d'un nombre important d'harmoniques du taux de répétition du signal optique. De cette manière, l'analyse du spectre permet de compenser la gigue relative de puissance susceptible d'être engendrée par le photodétecteur.

Toutefois, un tel système de mesure nécessite un photodétecteur à large bande passante. Il ne s'avère particulièrement pas adapté, par ailleurs, pour des trains d'impulsions à taux de répétition élevé, supérieur typiquement à 5 GHz, à moins évidemment de disposer d'analyseurs de spectre électronique excessivement onéreux.

Toujours dans le but d'éliminer l'influence du bruit de traitement électronique, une autre solution consiste à analyser le signal optique par auto-corrélation en intensité, comme cela est décrit par exemple dans la publication « All-optical measurements of background, amplitude, and timing jitters for high speed pulse trains or PRBS sequences usine autocorrelation function » (J. Fatome et al., Opt. Fiber. Technol., 84-91 2007) ou encore dans le document de brevet US 2003/0095304. Ce procédé d'analyse consiste essentiellement à établir une corrélation optique entre au moins deux impulsions successives d'un signal optique pulsé, puis à en déduire une fonction de distribution de probabilité de puissance. On évite ainsi l'utilisation d'une électronique trop importante.

Cependant, il résulte des particularités optiques de ce système un certain nombre d'inconvénients. En effet, il met en oeuvre des composantes de polarisation qui le rendent par conséquent dépendant de la polarisation et qui peut donc limiter ses applications potentielles. Par ailleurs, il implique, d'une part, un nombre élevé de pièces mécaniques, ce qui s'avère coûteux et complexe à régler mécaniquement, et il nécessite, d'autre part, la propagation du faisceau lumineux au moins en partie à l'air libre où il est susceptible d'être dégradé, ce qui limite la précision des mesures. Egalement, puisque la corrélation entre deux impulsions successives est réalisée par introduction d'un retard de la première impulsion par rapport à la seconde, il peut être nécessaire de prévoir un espace de propagation de grande longueur pour l'impulsion à retarder dans le cas où le taux de répétition du signal optique est faible. Par conséquent, ce système n'est pas adapté pour des trains d'impulsions à faible taux de répétition, inférieur typiquement à 20 GHz.

La présente invention a pour but de remédier à ces inconvénients et concerne un dispositif et un procédé de traitement d'un signal optique dont la puissance varie de manière aléatoire et est déterminée par une loi de densité de probabilité de puissance, comprise dans un intervalle de puissance définissant une plage de variation de puissance autour d'une puissance moyenne, pour :

- disposer des avantages conférés par un traitement déterminé, par exemple une mesure électronique qui offre notamment un faible coût, une adaptation à n'importe quel taux de répétition envisagé et une capacité à exploiter les mesures de multiples manières, et pour
- surmonter les inconvénients inhérents à ce traitement, tels que le brouillage des signaux optiques à faible gigue relative d'amplitude.

A cette fin, selon l'invention, le procédé de traitement du type défini ci-dessus est remarquable par le fait que :

- l'on établit une fonction de transfert optique dont la représentation graphique dans un diagramme « puissance d'entrée - puissance de sortie » présente au moins une portion sensiblement monotone, qui définit un seuil de puissance d'entrée pour lequel le prolongement de la portion sensiblement monotone engendre une puissance de sortie nulle,
- l'on agence ladite portion sensiblement monotone et l'intervalle de puissance de manière :

  o que ladite portion sensiblement monotone enveloppe sensiblement au moins la partie de l'intervalle de puissance pour laquelle la densité de probabilité de puissance est élevée, et
  o que ledit seuil de puissance soit hors dudit intervalle de puissance et présente un écart à la puissance moyenne qui soit sensiblement inférieur à ladite puissance moyenne, et

- l'on applique ladite portion sensiblement monotone à au moins une partie temporelle dudit signal optique en vue d'amplifier optiquement la variation relative de puissance de ladite partie temporelle.

Grâce à l'invention, et par analogie avec le domaine de la photographie, on réalise un « zoom » purement optique sur la variation relative de puissance du signal optique. Ce zoom optique, tout à fait paramétrable, permet de contrôler le niveau de gigue relative de puissance du signal, en vue de procéder à son traitement ultérieur, par exemple une mesure électronique. En effet, l'invention rend possible d'augmenter la variation relative de puissance du signal optique de manière suffisante pour surpasser le bruit engendré par le traitement, c'est-à-dire pour lui conférer un ordre de grandeur supérieur à celui du bruit de traitement, ce qui permet donc de limiter l'influence d'un tel bruit parasite.

L'homme du métier notera que l'amplification optique de la puissance d'un signal optique ne permet pas nécessairement d'amplifier la variation relative de puissance de ce signal. En effet, une amplification optique suivant un coefficient d'amplification prédéterminée permet d'amplifier à la fois la plage de variation de puissance et la puissance moyenne du signal, si bien que la variation relative de puissance dudit signal, en tant que rapport de ladite plage de variation sur la puissance moyenne, n'est pas amplifiée.

L'invention consiste ainsi à améliorer le traitement d'un signal optique, ce traitement étant susceptible de générer un bruit, grâce à une amplification purement optique de la seule variation relative de puissance de ce signal optique, préalablement au traitement initialement envisagé.

Par traitement, l'homme du métier, qui connaît parfaitement le traitement des signaux optiques, entendra facilement tous les traitements possibles comme, par exemple, la modulation, l'analyse et la mesure de signaux.

C'est d'ailleurs à propos de la mesure électronique des variations d'un signal optique qu'est née l'invention. Dans ce cadre, l'invention autorise une mesure électronique du signal optique, en bénéficiant des avantages qu'elle confère et sans toutefois souffrir de ses inconvénients, ce qui permet notamment :

- d'adapter facilement la cadence du détecteur (limitée par sa bande passante) au taux de répétition du signal et à la taille de courtes impulsions (pouvant aller de la nanoseconde à la sub-picoseconde),
- de favoriser une exploitation riche et diversifiée du signal reçu, en particulier pour l'évaluation de la gigue relative de puissance et de la densité de probabilité de puissance, et

- de disposer d'une large gamme de puissances.

En outre, grâce à l'invention, on augmente de façon purement optique la gigue relative de puissance. En effet, les écarts de puissance entre les impulsions restent sensiblement proportionnels du fait de la monotonie de la portion considérée de la fonction de transfert, ce qui permet donc d'augmenter les écarts entre ces impulsions. De surcroît, par le positionnement, selon l'invention, du seuil de puissance d'entrée (pour lequel le prolongement de ladite portion sensiblement monotone engendre une puissance de sortie nulle), on évite que cette amplification soit réalisée uniquement par un coefficient de proportionnalité, sans quoi la gigue relative qui en résulterait, puisqu'exprimée sous la forme du rapport entre la plage de variation de puissance et la puissance moyenne, ne serait pas amplifiée. L'invention ajoute au contraire un seuil d'amplification, analogue à la tension seuil d'une diode électronique, à partir duquel la portion considérée de la fonction de transfert opère une amplification de la puissance des impulsions. Ce seuil, dans la mesure où il ne s'applique qu'à la puissance moyenne et pas à la plage de variation de puissance, permet donc l'amplification de la gigue relative de puissance. Plus précisément, plus ce seuil de puissance est proche de la puissance moyenne du signal optique, plus l'amplification de la gigue relative est importante.

Dans un mode de mise en oeuvre particulier, dans lequel le signal optique se présente sous la forme d'un train d'impulsions, on amplifie optiquement la variation relative de puissance entre au moins deux desdites impulsions. Bien entendu, l'invention s'applique tout aussi bien à un signal autre, par exemple continu, alternatif.

En vue d'une mesure ultérieure du signal optique, on peut appliquer la portion sensiblement monotone à au moins une partie temporelle dudit signal optique en vue d'amplifier optiquement la variation relative de puissance de ladite partie temporelle afin que la variation relative de puissance amplifiée surpasse le bruit généré par la mesure ultérieure.

Par ailleurs, et en particulier du fait du caractère monotone de représentation graphique de la fonction de transfert, la gigue relative de puissance n'est pas (ou peu) déformée, ce qui rend possible la caractérisation détaillée ultérieure de la distribution statistique de puissance du signal, l'information obtenue n'étant ainsi plus limitée à l'écart-type (ou plage de variation de puissance) de cette distribution. Autrement dit, on peut extraire une information à la fois quantitative (sur la largeur de la distribution) et également qualitative (sur sa forme). En outre, tout type de défaut de linéarité de la fonction de transfert peut être compensé ultérieurement de manière électronique, dans la mesure où elle est sensiblement monotone.

On comprendra ici qu'il est particulièrement avantageux que la courbe formant la fonction de transfert soit parfaitement monotone sur toute la plage de variation de puissance, mais que l'invention n'est pas limitée à ce cas de figure. Il peut, en effet, être tout à fait suffisant qu'elle soit monotone pour les valeurs de puissance à densité de probabilité élevée. Dans le cas par exemple d'une densité de probabilité en forme de gaussienne, il importera que la courbe soit monotone sur la zone centrale de la gaussienne, sans qu'elle soit nécessairement monotone au niveau de ses extrémités. Autrement dit, le zoom optique selon l'invention autorise une forme de « vignetage » (si la courbe n'est pas monotone) ou de « distorsion » (si la courbe n'est pas linéaire).

On notera qu'il était connu de recourir à un traitement optique d'un signal pulsé, comme par exemple dans le document US 2005/220388, mais dans un but opposé à celui de l'invention, à savoir la régénération optique d'un signal par une fonction de transfert dont la pente moyenne est la plus nulle possible sur l'intervalle de puissance du signal, ce qui permet de mettre toutes les impulsions au même niveau de puissance crête. Ainsi, on constate que si l'art antérieur peut inciter à procéder à un traitement tout-optique d'un signal pulsé, ce n'est que pour parvenir à l'objectif exactement contraire à celui visé par la présente invention, cette dernière consistant justement à amplifier les variations de puissance crête au lieu de les annihiler, ce qui va donc à l'encontre des pratiques courantes dans le domaine du traitement de signaux optiques, tout cela ne faisant que souligner la brevetabilité de l'invention.

De préférence, la portion sensiblement monotone de la représentation graphique de la fonction de transfert enveloppe sensiblement l'intervalle de puissance, ce qui évite de déformer une partie de l'intervalle de puissance du signal optique et permet donc une amplification d'autant plus importante de la gigue relative de puissance du signal.

Dans un tel cas, la portion sensiblement monotone de la représentation graphique de la fonction de transfert peut être croissante ou décroissante, étant préféré qu'elle soit sensiblement croissante sur l'intervalle de puissance.

De préférence, la portion sensiblement monotone de la représentation graphique de la fonction de transfert est sensiblement linéaire sur l'intervalle de puissance, ce qui évite de déformer la distribution statistique de la puissance du signal et donc d'accéder facilement à cette dernière. Il est également possible, de manière alternative, de compenser ultérieurement d'éventuels défauts de linéarité de façon électronique.

Dans un mode de mise en oeuvre avantageux, le seuil de puissance d'entrée est sensiblement proche de l'intervalle de puissance. De cette manière, la portion sensiblement monotone de la représentation graphique de la fonction de transfert présente nécessairement, au niveau de l'intervalle de puissance du signal, une pente moyenne élevée et un positionnement optimal de son seuil de puissance d'entrée, ce qui amplifie d'autant mieux, conformément à l'invention, la gigue relative de puissance dudit signal.

On notera qu'il pourrait apparaître nécessaire que la portion sensiblement monotone de la représentation graphique de la fonction de transfert présente une pente moyenne supérieure à l'unité, mais en pratique cela n'est pas pris en compte du fait des pertes inhérentes à tout dispositif au sein duquel le signal serait amené à se propager. Tout au plus, il serait opportun que la pente normalisée (pour laquelle les pertes de propagation seraient déduites) de la portion sensiblement monotone de la représentation graphique de la fonction de transfert soit supérieure à 1.

Dans un mode également avantageux, après amplification optique de la variation relative de puissance d'au moins une partie temporelle du signal optique, la puissance de celle-ci est mesurée électroniquement en vue d'analyser les variations de puissance dudit signal.

On rend ainsi possible l'utilisation du traitement optique selon l'invention afin de mettre en oeuvre un procédé d'analyse des variations de puissances d'un signal optique pulsé, y compris lorsque ce signal présente une faible gigue relative de puissance. En effet, l'invention permet d'amplifier de façon purement optique la gigue relative du signal pour que celle qu'engendre une mesure électronique devienne négligeable par rapport à la gigue optique amplifiée.

Dans un mode de mise en oeuvre particulier où l'on souhaite connaître d'abord l'ordre de grandeur du niveau de gigue relative de puissance du signal avant d'éventuellement de l'amplifier optiquement selon l'invention, il est possible de réaliser la succession d'étapes suivantes :

- l'on mesure d'abord électroniquement la puissance d'au moins une partie temporelle du signal optique,
- l'on en déduit la variation relative de puissance dudit signal,
- l'on compare ladite variation relative de puissance ainsi déduite avec le bruit de mesure électronique, et
- en fonction du résultat de ladite comparaison, l'on amplifie optiquement la variation relative de puissance d'au moins une partie temporelle dudit signal afin que la variation relative de puissance amplifiée surpasse le bruit de mesure électronique, puis l'on mesure électroniquement la puissance de ladite partie temporelle.

De préférence, afin d'éliminer l'influence du bruit électronique de gigue de puissance, on amplifie optiquement la variation relative de puissance d'au moins une partie du signal optique de manière que celle-ci, après amplification optique, présente un ordre de grandeur supérieur à la variation relative de puissance engendrée par la mesure électronique.

De préférence encore, afin de positionner de manière optimale l'intervalle de puissance du signal optique par rapport à la portion sensiblement monotone de la représentation graphique de la fonction de transfert, on ajuste la puissance moyenne du signal optique par rapport à un point de fonctionnement optimal sur la portion sensiblement monotone, eu égard à la plage de variation de puissance et à loi de densité de probabilité dudit signal optique.

L'invention concerne également un dispositif pour la mise en oeuvre du procédé de traitement d'un signal optique selon l'un des modes de mise en oeuvre définis ci-dessus, ce dispositif comportant :

- des moyens pour établir une fonction de transfert optique dont la représentation graphique dans un diagramme puissance optique d'entrée - puissance optique de sortie présente au moins une portion sensiblement monotone, qui définit un seuil de puissance d'entrée pour lequel le prolongement de la portion sensiblement monotone engendre une puissance de sortie nulle, et
- des moyens pour appliquer ladite portion sensiblement monotone à au moins une partie temporelle dudit signal optique en vue d'amplifier optiquement la variation relative de puissance de ladite partie temporelle.

Afin de positionner de manière adéquate le seuil de puissance d'entrée, les moyens pour établir la fonction de transfert optique comprennent au moins un élément optique présentant des propriétés optiques non-linéaires. Il va cependant de soi que l'invention n'est pas limitée à ce type d'élément optique, dans la mesure où il rend possible un positionnement adéquat du seuil de puissance d'entrée de la portion sensiblement monotone, comme cela peut être en particulier le cas avec un élément optique aux propriétés linéaires par morceaux ou encore linéaires à seuil.

Dans un mode de réalisation particulier, les moyens pour établir la fonction de transfert optique comprennent une fibre optique en amont d'un filtre passe-bande, les caractéristiques de la fibre optique étant déterminées de manière que la représentation graphique de la fonction de transfert optique présente au moins une portion sensiblement monotone permettant, selon l'invention, l'amplification de la gigue relative de puissance du signal optique.

Dans un mode de réalisation avantageux, le dispositif selon l'invention est disposé en amont d'un dispositif de mesure électronique de la puissance du signal optique, en vue d'analyser, après amplification optique de la variation relative de puissance d'au moins une partie dudit signal, les variations de puissance dudit signal.

L'invention permet ainsi de réaliser un système d'analyse des variations de puissance d'un signal optique pulsé, ce système comprenant un dispositif de traitement optique selon l'invention, ainsi qu'un dispositif de mesure électronique en aval du dispositif optique.

Afin d'analyser les variations du signal optique, le dispositif électronique comporte avantageusement un photodétecteur agencé pour fournir un signal électrique fonction du signal optique reçu, la cadence du photodétecteur étant adaptée à celle des impulsions du signal optique.

Afin d'évaluer la distribution statistique de puissance du signal optique, le dispositif de mesure électronique comporte avantageusement des moyens d'acquisition et de traitement du signal électrique (fonction du signal optique), ces moyens étant agencés notamment pour établir la loi de densité de probabilité de puissance du signal optique.

Afin d'éviter que les mesures ne soient perturbées par un défaut de linéarité de la portion sensiblement monotone de la représentation graphique de la fonction de transfert, le dispositif de mesure électronique comporte avantageusement des moyens d'acquisition et de traitement du signal électrique fonction du signal optique, ces moyens étant agencés notamment pour compenser les éventuels défauts de linéarité de la fonction de transfert. Afin d'ajuster précisément la puissance moyenne du signal optique en fonction du point de fonctionnement optimal sur la portion sensiblement monotone de la représentation graphique de la fonction de transfert, la puissance aléatoire du signal optique étant comprise dans un intervalle de puissance, le dispositif selon l'invention est avantageusement disposé en aval d'un amplificateur optique, l'amplificateur étant en liaison avec le dispositif de mesure électronique par l'intermédiaire d'un contrôleur électronique en vue d'ajuster l'intervalle de puissance dudit signal, par rapport à la portion sensiblement monotone de la représentation graphique de la fonction de transfert, en fonction d'une mesure électronique préalable de la puissance d'au moins une partie temporelle dudit signal dont la variation relative de puissance a été amplifiée.

L'invention peut trouver une application particulièrement avantageuse dans le domaine de la biophotonique - ou plus généralement de la photonique - dans lequel il peut être souhaitable de mesurer de faibles variations de signal, pour détecter la présence d'une espèce chimique dans un échantillon. A ce titre, l'invention concerne également un procédé de détection d'une espèce chimique dans un échantillon, selon lequel on envoie sur l'échantillon un signal optique à variation relative de puissance nulle, afin de faire interagir ledit signal optique avec ledit échantillon, puis on mesure la variation relative de puissance dudit signal optique, après interaction avec ledit échantillon, en vue de détecter la présence de ladite espèce chimique, ladite mesure de variation relative générant un bruit de mesure. Selon l'invention, ce procédé est remarquable par le fait qu'on applique au signal optique, après interaction avec ledit échantillon et préalablement à la mesure de ladite variation relative de puissance, le procédé de traitement selon l'un des modes de réalisation ci-dessus, afin que la variation relative de puissance amplifiée dudit signal optique après interaction surpasse ledit bruit de mesure. Ainsi, les durées d'acquisition nécessaires à une mesure fiable de la signature d'une espèce chimique à détecter peuvent être améliorées de façon significative.

D'autres caractéristiques et avantages de l'invention apparaîtront lors de la description qui suit faite en regard du dessin annexé, donné à titre d'exemple non limitatif, dans lequel :

- les figures 1A et 1B sont des diagrammes représentant un signal optique pulsé avant amplification optique selon l'invention ;
- la figure 2 est une vue schématique d'un dispositif de traitement selon un premier mode de réalisation l'invention ;
- la figure 3 est un diagramme représentant la fonction de transfert du dispositif de traitement de la figure 2 ;
- les figures 4A et 4B sont des diagrammes représentant le signal optique pulsé après amplification optique selon l'invention ;
- la figure 5 est une vue schématique d'un système d'analyse selon un premier mode de réalisation l'invention ;
- la figure 6 est une vue schématique du dispositif de mesure électronique intégré au système d'analyse de la figure 5 ;
- les figures 7A et 7B sont des diagrammes illustrant une variante particulière d'analyse électronique du signal selon l'invention ;
- les figures 8A et 8B sont des vues schématiques d'un système d'analyse à deux étapes successives d'exécution du procédé d'analyse selon un mode particulier de réalisation ;
- la figure 9 est une vue schématique d'un système d'analyse selon un second mode de réalisation l'invention ; et
- les figures 10A à 10D sont des diagrammes illustrant différentes formes de fonction de transfert autorisant l'amplification optique d'un signal selon l'invention.

Sur ces figures, des références identiques désignent des éléments semblables.

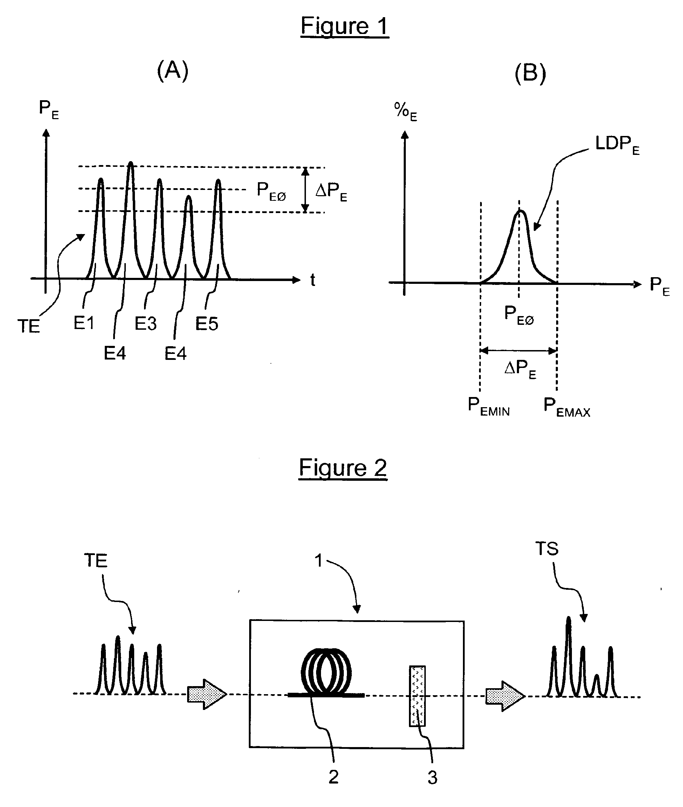

Le signal optique TE de la figure 1A se présente sous la forme d'un train d'impulsions, comportant une succession d'impulsions E1, E2, E3, E4 et E5 à une longueur d'onde $\lambda_E$ donnée, suivant un taux de répétition donné. La puissance crête $P_E$ de chaque impulsion E varie de manière aléatoire dans un intervalle de puissance $[P_{EMIN};P_{EMAX}]$, défini par une puissance minimale $P_{EMIN}$ et une puissance maximale $P_{EMAX}$, la puissance $P_E$ variant ainsi autour d'une valeur moyenne de puissance $P_{E\varnothing}$, du fait par exemple d'une dégradation du signal lors de sa propagation le long d'une ligne de transmission optique. Cette variation de la puissance crête $P_E$ s'effectue sur une plage de variation aléatoire de puissance crête $\Delta P_E$, dont le rapport à la puissance moyenne $P_{E\varnothing}$ est généralement connue sous le nom de gigue relative de puissance (ou d'amplitude), égale à $\Delta P_E / P_{E\varnothing}$ et référencée $G_E$. Les puissances crêtes $P_{E1}$ à $P_{E5}$ des impulsions E1 à E5 sont ainsi comprises entre $P_{E\varnothing}$

- $\Delta P_E$ / 2 et $P_{E\emptyset}$ + $\Delta P_E$/2.

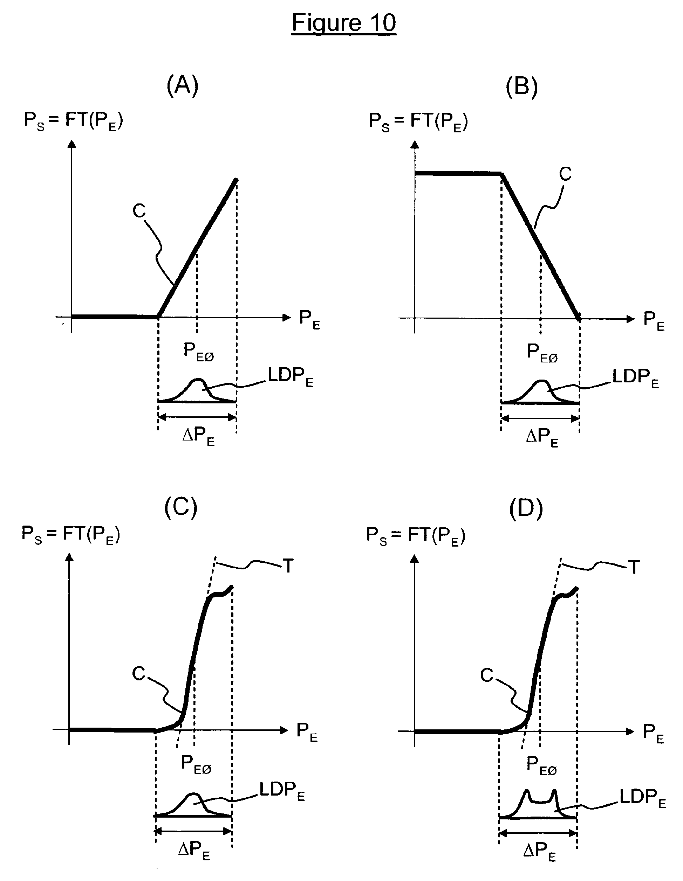

Cette variation aléatoire de puissance peut être représentée sous la forme d'une loi de densité de probabilité de puissance $LDP_E$, telle que représentée sur la figure 1B, qui donne la distribution statistique des puissances $P_E$ des impulsions E du signal optique dans la plage de variation de puissance $\Delta P_E$. Dans le présent exemple, la distribution statistique de puissance présente sensiblement la forme d'une gaussienne centrée sur $P_{E\emptyset}$, de largeur totale $\Delta P_E$ et de largeur à mi-hauteur $\Delta P_E$ / 2. On notera cependant que cet exemple n'est pas limitatif et que l'invention s'applique indifféremment à d'autres types de distribution statistique de puissance, comme cela est illustré ultérieurement par les figures 10A à 10D.

Dans le cas où la gigue relative de puissance $G_E$ présente un ordre de grandeur voisin de celui de la gigue relative de puissance $G_{ELECTRONIQUE}$ qu'est susceptible d'engendrer un dispositif électronique de mesure, par exemple de l'ordre de 2 à 5%, le bruit de gigue inhérent au signal optique TE et le bruit de gigue électronique s'ajoutent de manière aléatoire, ce qui brouille ce signal TE de façon irréversible et empêche de remonter à la gigue relative de puissance propre au signal TE.

Pour amplifier la variation relative de puissance $G_E$ du signal optique TE, l'invention propose d'utiliser le dispositif de traitement 1 de la figure 2, qui comporte ici une fibre optique 2 et un filtre passe-bande 3. La fibre 2 est une fibre hautement non-linéaire (coefficient Kerr élevé), constituée par exemple en silice, de préférence à dispersion anormale, en vue d'élargir le spectre du signal TE par auto-modulation de phase dans ladite fibre 2. Le signal, dont le spectre est ainsi élargi, est ensuite dirigé vers le filtre 3, dont la longueur d'onde centrale est sensiblement égale à la longueur d'onde initiale $\lambda E$ du signal TE.

Pour parvenir à amplifier la variation relative de puissance du signal, certaines des caractéristiques de la fibre 2 (en particulier sa longueur, son coefficient de non-linéarité et son coefficient de dispersion) sont choisies de manière adéquate afin d'utiliser les propriétés non-linéaires de la silice.

A titre d'exemple, une fibre adéquate peut être une fibre non-linéaire commerciale OFS à dispersion anormale, pour laquelle :

- la longueur est de 4 km ;
- le coefficient de non-linéarité (Kerr) est de 10 $W^{-1}.km^{-1}$ ;
- le coefficient de dispersion est de 0,7 $ps.km^{-1}.nm^{-1}$.

Le filtre 3 présente par exemple une largeur spectrale de 1,5 nm à mi-hauteur. Il peut s'agir d'un filtre passe-bande courant dans le domaine, mais il s'agit préférentiellement d'un filtre composé de deux réseaux de Bragg cascadés relayés par deux circulateurs optiques, ce qui permet la réalisation d'un dispositif intégralement fibré.

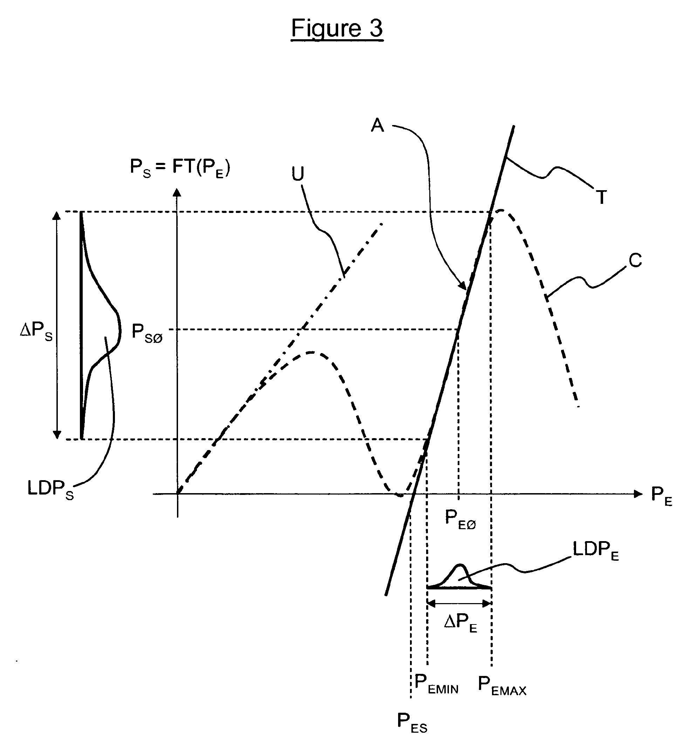

Il est possible avec l'agencement d'une telle fibre 2 et d'un tel filtre 3 d'établir la fonction de transfert optique FT de la figure 3, qui définit la relation entre la puissance crête $P_S$ du signal en sortie et la puissance crête $P_E$ du signal en entrée du dispositif 1, par une fonction $P_S$ = FT($P_E$), dont la représentation graphique est donnée par la courbe représentative C (indiquée en pointillés).

La première portion de cette courbe C (pour de faibles puissances d'entrée) croît de manière linéaire. La courbe C est ainsi tangente, à partir de l'origine, à la droite U. La seconde portion de cette courbe C est décroissante, puis sa troisième portion est à nouveau croissante. C'est cette troisième portion de la courbe C, référencée par la lettre A et qui couvre l'intervalle $[P_{EMIN};P_{EMAX}]$, que l'on exploite selon l'invention.

Pour cela, on ajuste l'intervalle de puissance $[P_{EMIN};P_{EMAX}]$ (ou encore la puissance moyenne $P_{E\emptyset}$ eu égard à la plage de variation aléatoire de puissance crête $\Delta P_E$) pour que cette portion A :

- soit sensiblement monotone, avec une pente moyenne normalisée en valeur absolue supérieure à l'unité,
- présente un seuil de puissance d'entrée $P_{ES}$ (pour lequel le prolongement T de la portion A engendre une puissance de sortie $P_S$ nulle) qui soit situé hors de l'intervalle de puissance $[P_{EMIN};P_{EMAX}]$ et qui présente un écart à la puissance moyenne $P_{E\emptyset}$ qui soit sensiblement inférieur à $P_{E\emptyset}$, et
- enveloppe l'intervalle de puissance $[P_{EMIN};P_{EMAX}]$.

La fonction de transfert FT est quasi-linéaire sur la portion A, si bien que cette courbe peut être approximée, du point de vue du signal optique TE traversant le dispositif 1, par la tangente T à la courbe C au point $P_{E\emptyset}$. La courbe C peut ainsi être considérée comme équivalente à une droite d'équation $P_S$ = B.$P_E$+ D. Dans cette équation, B représente le coefficient directeur de la droite (le niveau d'amplification du signal) et D l'ordonnée à l'origine (le seuil à partir duquel s'opère l'amplification). On déduit de cette équation :

- d'une part, $P_{S\emptyset}$ = B.$P_{E\emptyset}$+ D, et
- d'autre part, $\Delta P_S$ = B.$\Delta P_E$.

La gigue relative, résultant du dispositif 1, devient alors :

$$\frac{\Delta P_S}{P_{S0}} = \frac{B.\Delta P_E}{B.P_{E0} + D} = \frac{\Delta P_E}{P_{E0}} \cdot \frac{1}{1 + \dfrac{D}{B} \cdot \dfrac{1}{P_{E0}}}$$

La gigue relative est ainsi augmentée d'un facteur K :

$$K = \cfrac{1}{1 + \cfrac{D}{B} \cdot \cfrac{1}{P_{E0}}}$$

Si l'on écrit $P_{ES}$ le seuil de puissance d'entrée, pour lequel la tangente T (qui prolonge la portion A) coupe l'axe des abscisses (et engendre ainsi une puissance de sortie nulle), il vient que :

$$P_{ES} = -\frac{D}{B} \text{ et } K = \cfrac{1}{1 - \cfrac{P_{ES}}{P_{E0}}}$$

Pour que la gigue relative soit augmentée, il importe que le coefficient d'amplification de la gigue soit tel que $|K| > 1$, ce qui entraîne la relation :

$$-1 < 1 - \frac{P_{ES}}{P_{E0}} < 1 \iff 0 < P_{ES} < 2.P_{E0}$$

Cette relation d'inégalité prend à la fois en compte le cas d'une pente positive et le cas d'une pente négative. Ainsi, plus précisément, il est nécessaire que $0 < P_{ES} < P_{E0}$ pour une pente positive et $P_{E0} < P_{ES} < 2.P_{E0}$ pour une pente négative. L'on en déduit alors que la représentation graphique de la fonction de transfert FT doit se présenter, selon l'invention, sous la forme d'une courbe C dont une portion A est sensiblement monotone sur l'intervalle $[P_{E\emptyset} - \Delta P_E / 2 ; P_{E\emptyset} + \Delta P_E / 2]$ correspondant à la largeur de la plage $\Delta P_E$, ou du moins sur l'intervalle $[P_{E\emptyset} - \Delta P_E / 4 ; P_{E\emptyset} + \Delta P_E / 4]$ correspondant à la largeur à mi-hauteur pour une distribution gaussienne de puissance (pour le cas où l'on autorise un défaut de monotonie dans les zones de faible densité de probabilité). En outre, il importe que la portion A soit décalée par rapport à l'origine du repère graphique, de manière que son prolongement (qui peut être pris au point $P_{E\emptyset}$ lorsque la portion A est linéaire) coupe l'axe des abscisses à une puissance $P_{ES}$ telle que $0 < P_{ES} < 2.P_{E0}$.

Afin d'injecter, conformément à l'invention, le signal optique dans la fibre 2 et le filtre 3 (ou plus généralement dans l'élément optique présentant la fonction de transfert optique adéquate), l'on utilise des moyens adéquats (non représentés), par exemple un collimateur ou un système de conjugaison optique convergeant. Ces moyens permettent alors d'appliquer la portion A aux impulsions E du signal optique TE en vue d'amplifier la variation relative de puissance $G_E$ de ces impulsions.

De cette manière, on obtient en sortie du dispositif de traitement optique 1 un signal optique pulsé TS, traité de manière que sa plage de variation de puissance $\Delta P_S$ soit élargie par rapport à $\Delta P_E$, tout en ne déformant pas (ou peu) sa distribution statistique de puissance $LDP_S$, par rapport à la distribution d'entrée $LDP_E$.

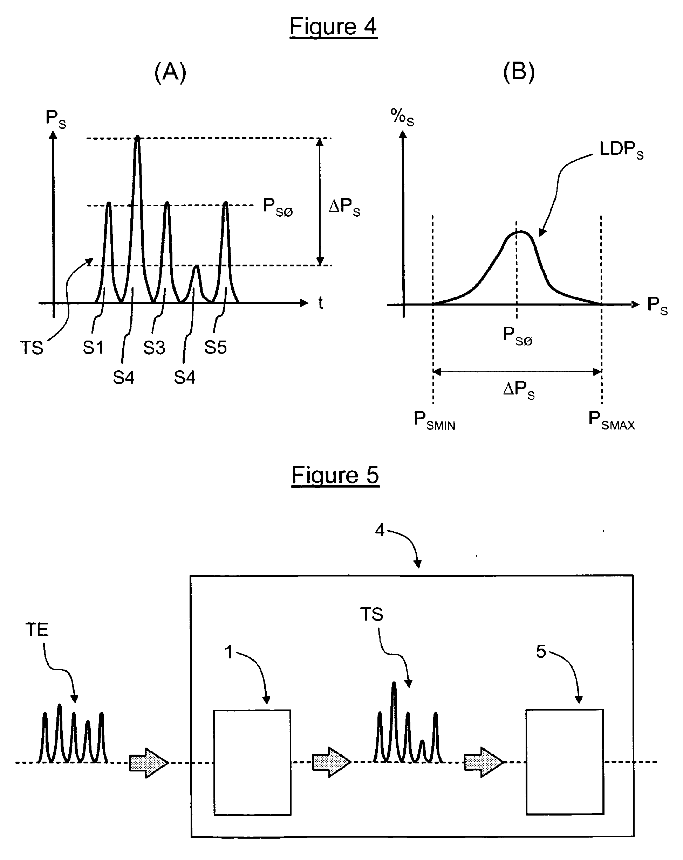

Un tel signal TS en sortie du dispositif 1 est représenté plus en détail sur les figures 4A et 4B. Les impulsions S1, S2, S3, S4 et S5 du signal TS présentent chacune une puissance crête $P_S$ amplifiée de façon sensiblement uniforme et linéaire par rapport à la puissance crête $P_E$ des impulsions E1 à E5, ce qui amplifie d'autant les écarts de puissance entre les impulsions S1 à S5, et l'intervalle de puissance $[P_{SMIN};P_{SMAX}]$ s'en trouve donc élargi, de même que la plage de variation de puissance $\Delta P_S$ est augmentée. De la même façon, la loi de densité de probabilité $LDP_S$ du signal TS est étirée sans aucune déformation (ou peu de déformation), cette loi $LDP_S$ se présentant sous la forme d'une gaussienne centrée sur la puissance moyenne $P_{S\emptyset}$ et de largeur $\Delta P_S$, ce qui revient à avoir « zoomé » de manière purement optique sur la loi de densité de probabilité $LDP_E$ du signal initial TE.

L'homme du métier notera qu'il lui est possible, à partir de l'exemple et des indications ci-dessus, d'adapter le dispositif de traitement optique 1 à la fonction de transfert qu'il souhaite mettre en oeuvre. L'homme du métier pourra, à cet effet, modifier les caractéristiques de la fibre optique de manière à mettre en exergue ses propriétés non-linéaires sur la gamme de puissance et de longueur d'onde du signal TE, de façon à obtenir la fonction de transfert FT souhaitée.

L'homme du métier notera par ailleurs que l'agencement ci-dessus du dispositif 1 n'est donné qu'à titre d'exemple et qu'il pourra mettre en oeuvre d'autres types de composants non-linéaires, ou encore linéaires par morceaux, ou bien encore linéaires à seuil, par exemple des cristaux non-linéaires ou certains types de semi-conducteurs tels que des diodes, à la réserve près ces composants doivent permettre de s'adapter à la taille et à la cadence des impulsions du signal.

L'élément essentiel est en effet le moyen de positionner le seuil de puissance d'entrée de sorte qu'il soit différent de la puissance nulle (dans le cas où A est croissante) ou du symétrique de la puissance nulle par rapport à la puissance moyenne $P_{E0}$, c'est-à-dire $2.P_{E0}$ (dans le cas où A est décroissante). Pour cela, plusieurs techniques sont connues et adaptées à des impulsions optiques ultra-brèves.

Parmi les techniques de positionnement de ce seuil figurent les techniques suivantes, bien connues de l'homme du métier :

- le découpage spectral (décalé ou non) d'un spectre optique élargi par auto-modulation de phase dans une fibre optique, comme décrit ci-dessus ;
- l'auto-décalage fréquentiel Raman de solitons, suivi d'un découpage spectral par un filtre laissant passer les grandes longueurs d'onde ;
- les diffusions Raman et Brillouin ;

- le mélange à quatre ondes dans une fibre optique ;
- les boucles à miroir non-linéaire dans une fibre optique ;
- la rotation non-linéaire de polarisation ; et
- des absorbants saturables présentant un seuil élevé.

Dans un mode de réalisation avantageux, la fonction non-linéaire du dispositif 1 est intégrée sur un guide d'onde hautement non-linéaire, par exemple en chalcogénure ou en silicium, en vue de confiner cette fonction sur une puce optique, la taille du dispositif étant ainsi réduite.

L'homme du métier notera également que la gigue relative de puissance $G_E$ du signal optique TE est d'autant mieux amplifiée que le coefficient directeur B de la tangente T est grand et que la puissance $P_{ES}$ (pour laquelle ladite tangente T coupe l'axe des abscisses) est proche de la puissance moyenne $P_{EØ}$.

L'homme du métier notera encore que, dans la mesure où le coefficient amplificateur K de la gigue relative $G_E$ peut être calibré par la mesure préalable de la fonction de transfert FT du dispositif 1, il est aisé de remonter à la gigue relative initiale $G_E$ à partir de la gigue relative $G_S$ après traitement optique.

Le traitement optique d'un signal optique pulsé selon l'invention peut être appliqué à l'analyse des variations de puissance d'un signal, en vue d'évaluer notamment sa gigue de puissance relative $G_E$ et sa distribution statistique de puissance $LDP_E$. Il est pour cela mis en oeuvre le système de mesure 4 de la figure 5, qui comprend un dispositif de traitement optique 1 tel que décrit précédemment, ainsi qu'un dispositif de mesure électronique 5, disposé de manière à recevoir le signal TS, résultant du traitement optique du signal initial TE.

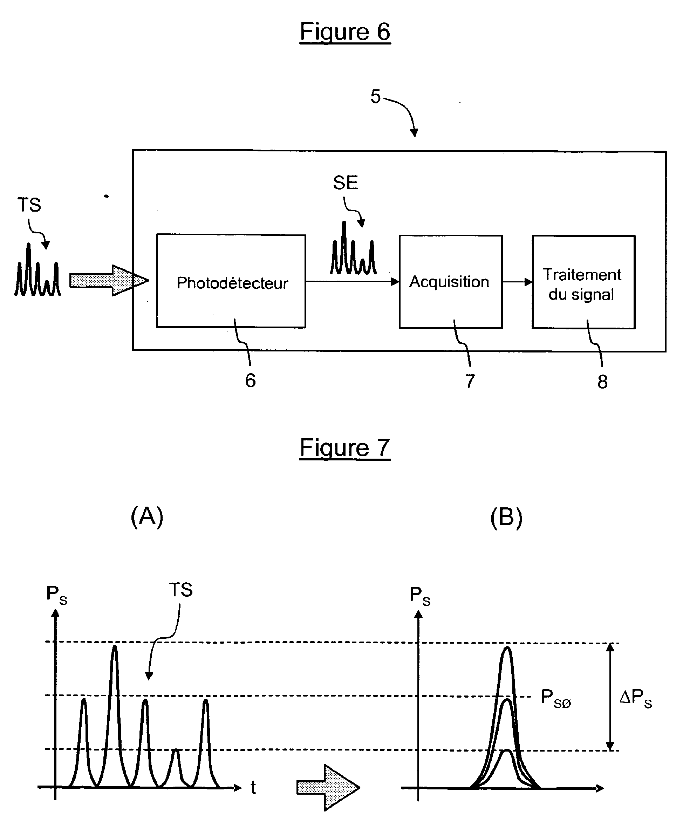

Le dispositif de mesure électronique 5 comprend plus précisément, en référence à la figure 6, un photodétecteur 6, ainsi que des moyens d'acquisition et de traitement de signaux, référencés respectivement 7 et 8. Le signal TS atteint le photodétecteur 6, dont le temps de réponse est comparable au débit dudit signal TS, de manière à convertir ledit signal optique TS en un signal électronique SE qui lui est directement proportionnel. Ce signal SE est ensuite acquis par les moyens 7, puis traités par les moyens 8, qui sont des éléments électroniques bien connus de l'homme du métier.

A titre d'exemple, pour l'analyse d'un train d'impulsions de taille 2 picosecondes générées avec un taux de répétition de 10 GHz, le photodétecteur 6 peut être une photodiode de bande passante 50 GHz, tandis que les moyens d'acquisition 7 et de traitement 8 peuvent être réalisés à partir d'un oscilloscope rapide à échantillonnage, éventuellement déclenché sur la source lumineuse ayant généré le signal optique TE.

Des moyens de visualisation du signal peuvent également être prévus afin de transmettre à l'utilisateur du système 4 des informations visuelles et synthétiques sur le signal TE, par exemple en réalisant un « diagramme de l'oeil », obtenu à partir du signal TS (figure 7A) par resynchronisation et superposition de l'ensemble des impulsions S1 à S5, de façon que l'épaisseur de la partie supérieure du signal ainsi obtenu (figure 7B) fournisse directement et visuellement l'information sur la plage de variation de puissance crête $\Delta P_S$.

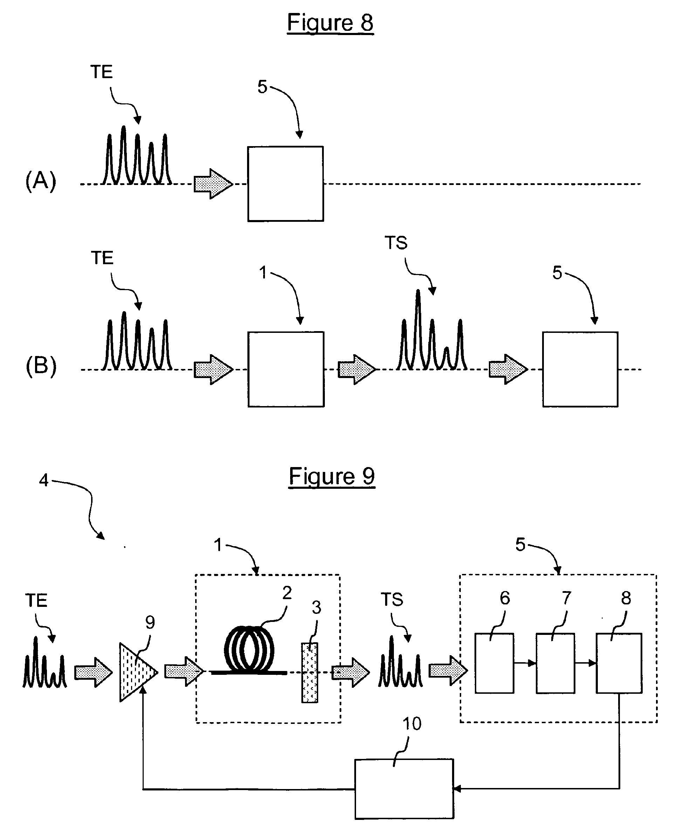

De manière alternative à la réalisation d'un traitement optique suivi d'une mesure électronique, il est possible, comme illustré par les figures 8A et 8B, de procéder d'abord à une mesure électronique de la puissance $P_E$ des impulsions E du signal initial TE (figure 8A). De cette mesure peut ensuite être déduite la puissance moyenne $P_{EØ}$, la plage de variation de puissance $\Delta P_E$, et donc la gigue relative $G_E$. Cette valeur de gigue est ensuite comparée à la gigue relative engendrée par l'électronique du dispositif 5, $G_{ELECTRONIQUE} = \Delta P_{ELECTRONIQUE} / P_{EØ}$, qui peut être déterminée préalablement. Si la gigue mesurée présente un ordre de grandeur supérieur à la gigue de l'électronique, il apparaît que la mesure n'a pas été perturbée par la gigue électronique et qu'il n'est donc pas nécessaire de traiter optiquement le signal TE. Si, au contraire, la gigue mesurée présente un ordre de grandeur inférieur ou égal à la gigue de l'électronique, il importe d'effectuer un tel traitement selon l'invention. Pour cela, l'on insère le dispositif 1 (décrit en référence à la figure 2) en amont du dispositif 5, et l'on procède ensuite au traitement optique du signal TE et enfin à la mesure électronique de la puissance $P_S$ du signal TS après traitement (figure 8B).

Dans un mode de réalisation préféré, illustré par la figure 9, il est disposé un amplificateur optique 9 en amont du dispositif de traitement optique 1 de manière à amplifier optiquement le signal pour qu'il atteigne une puissance crête $P_E$ optimale eu égard à la portion A de la représentation graphique de la fonction de transfert optique FT dudit dispositif 1, c'est-à-dire que la plus grande partie possible de l'intervalle de puissance $[P_{EMIN};P_{EMAX}]$ puisse être traitée conformément à l'invention. En effet, il se peut que les caractéristiques du dispositif 1 (et par là-même sa fonction de transfert FT) soit déterminées de façon irréversible dès sa fabrication, tandis que la puissance moyenne $P_{EØ}$ du signal TE peut être inconnue. Cet amplificateur 9 permet alors de compenser ce manque d'information par l'ajustement adéquat de $P_{EØ}$. A ce titre, l'amplificateur 9 peut être d'un type standard dans le domaine des télécommunications optiques, par exemple un amplificateur à fibre dopée erbium EDFA.

En outre, il est possible d'adjoindre au système d'analyse 4 un contrôleur électronique 10 en liaison avec, d'une part, les moyens de traitement de signaux 8 et, d'autre part, l'amplificateur 9. Grâce à un tel agencement, il est possible de régler la valeur de $P_{EØ}$ en fonction de la plage de variation $\Delta P_E$ considérée et de la fonction de transfert FT.

L'invention a été décrite ci-dessus pour l'amplification optique de la gigue relative d'un signal TE dont la loi de densité de probabilité $LDP_E$ présente la forme d'une gaussienne, par un dispositif de traitement optique dont la fonction de transfert (décrite ci-dessus en référence à la figure 3) est monotone croissante et sensiblement linéaire sur l'intervalle de fonctionnement $[P_{E\emptyset} - \Delta P_E / 2 ; P_{E\emptyset} + \Delta P_E / 2]$. Il va cependant de soi que l'invention s'applique également dans d'autres cas, par exemple :

- un dispositif de traitement optique dont la fonction de transfert FT est linéaire par morceaux, et, plus particulièrement, à la fois linéaire et croissante sur la plage $[P_{EMIN}; P_{EMAX}]$ (figure 10A) ;
- un dispositif de traitement optique dont la fonction de transfert FT est linéaire par morceaux, et, plus particulièrement, à la fois linéaire et décroissante sur la plage $[P_{EMIN}; P_{EMAX}]$ ; dans ce cas, la distribution statistique $LDP_S$ résultante est inversée et il suffit de retraiter électroniquement le signal TS reçu pour remonter à $LDP_S$ puis $LDP_E$ (figure 10B) ;
- un dispositif de traitement optique dont la fonction de transfert FT est croissante et linéaire au voisinage de la puissance moyenne $P_{E\emptyset}$ (pic de densité de probabilité de la gaussienne $LDP_E$) mais n'est plus linéaire sur les bords (zones de faible densité de probabilité de la gaussienne) ; dans ce cas, la majeure partie des impulsions est correctement amplifiée selon l'invention, tandis que les impulsions pour lesquelles la puissance crête présente une valeur extrême sont déformées de façon non-linéaire ; on remonte alors à la loi $LDP_E$ par la connaissance préalable de la fonction de transfert FT, si bien que l'on peut compenser les défauts de linéarité de FT de manière électronique au niveau du dispositif 5 (figure 10C) ; et
- un dispositif de traitement optique pour l'amplification d'un signal TE dont la loi de densité de probabilité $LDP_E$ ne présente pas la forme d'une gaussienne (par exemple ici avec deux pics), dispositif dont la fonction de transfert FT est croissante et linéaire au voisinage des deux pics mais n'est plus linéaire ailleurs ; dans ce cas, également, il suffit de connaître la forme de la fonction FT pour compenser ses défauts de linéarité de manière électronique au niveau du dispositif 5 (figure 10D).

On notera qu'une fonction de transfert FT dont une portion A de la représentation graphique est parfaitement monotone et linéaire sur l'intervalle $[P_{EMIN}; P_{EMAX}]$, et présentant un seuil de puissance d'entrée $P_{ES}$ dans l'intervalle $]0; P_{EMIN}]$ U $[P_{EMAX}; P_{E0}[$, convient à tout type de distribution statistique de puissance $LDP_E$. Aussi, il est préférentiellement utilisé, selon l'invention, un dispositif tout-optique apte à présenter ce type de fonction de transfert optique.

On notera également que l'invention s'applique à n'importe quel type de distribution statistique de puissance d'un signal optique pulsé, sans qu'il soit nécessaire de définir préalablement des hypothèses sur la forme de cette distribution, en particulier une hypothèse non-vérifiable de distribution statistique gaussienne. L'invention présente en effet l'avantage de pouvoir s'appliquer à tout type de distribution, par exemple uniforme, gaussienne ou bien avec une pluralité de maximas.

On notera encore que l'invention permet une visualisation en temps réel des résultats de la mesure, à partir des fonctions incorporées classiquement dans un oscilloscope électronique, ce qui évite le recours au développement d'un logiciel de commande ou bien encore d'outils électroniques spécifiques. En outre, l'invention est susceptible d'être mise en oeuvre avec des éléments optiques courants dans le commerce, ce qui limite les coûts de fabrication.

On notera encore que l'évaluation de la distribution statistique, par exemple sous la forme d'un histogramme, est effectuée ici de manière synchrone, ce qui nécessite un signal d'horloge. Le recours à ce type de signal peut être évité, pour une simplification du système d'analyse selon l'invention, avec une méthode de détection asynchrone combinée à des moyens de traitement de signaux agencés en vue de compenser le défaut de synchronisation de la détection.

L'invention a été décrite ci-dessus pour l'analyse d'un signal optique se présentant sous la forme d'un train d'impulsions, mais il va de soi que l'homme du métier saura l'adapter à d'autres formes de signal optique, par exemple continu ou alternatif. Dans le cas d'un signal continu, l'invention permet de déterminer à intervalle régulier ses variations de puissance, le taux de répétition étant déterminé par la cadence du photodétecteur.

L'invention a été également décrite ci-dessus pour une application à l'analyse des variations d'amplitude (ou de puissance) d'un signal optique pulsé, ce qui permet de caractériser une source optique, en particulier une source émettant des signaux de télécommunications (des impulsions dont la taille est comprise entre la dizaine et la centaine de picosecondes), une source émettant des signaux ultra-brefs (sources dites « mode-lockées »), ou encore toute source optique (inférieure à la nanoseconde) dont l'on souhaite connaître la distribution statistique des fluctuations d'amplitude. Il va cependant de soi que l'invention n'est pas limitée à cette application et qu'elle convient pour tout autre type d'application où il est souhaitable d'amplifier la gigue de puissance d'un signal de façon purement optique.

En particulier, la présente invention peut être avantageusement utilisée dans le domaine de la biophotonique - ou plus généralement de la photonique - dans lequel il peut être souhaitable de mesurer de faibles variations de signal. Ainsi, afin de détecter la présence éventuelle d'une espèce chimique dans un échantillon, il est possible, selon une utilisation particulière de l'invention :

- d'envoyer un train d'impulsions ultrabrèves (à variation relative de puissance nulle) sur l'échantillon à analyser afin de faire interagir ledit train avec ledit échantillon, l'espèce chimique à détecter étant alors susceptible d'engendrer une variation relative de puissance unique, apte à constituer une signature de ladite espèce ;

- d'amplifier optiquement la variation relative de puissance du signal après interaction afin que la variation relative de puissance amplifiée surpasse le bruit de mesure électronique ultérieure, de manière que les faibles fluctuations du signal engendrées par l'espèce chimique à détecter soient amplifiées de façon spécifique ; et

- de mesurer électroniquement la variation relative de puissance ainsi amplifiée du signal pour en déduire la présence éventuelle de ladite espèce chimique.

Une telle utilisation du procédé de traitement selon l'invention permet ainsi d'améliorer à la fois les durées d'acquisition nécessaires à une mesure fiable de la signature d'une espèce chimique à détecter, et les seuils de détectabilité à partir desquels ladite espèce chimique est considérée comme présente. Une telle application peut être intégrée - quoique non exclusivement - à des systèmes de spectroscopie (linéaire ou non-linéaire), d'absorption Raman, etc.

**Revendications**

1. Procédé de traitement d'un signal optique (TE) dont la puissance ($P_E$) varie de manière aléatoire et est déterminée par une loi de densité de probabilité de puissance ($LDP_E$), comprise dans un intervalle de puissance ($[P_{EMIN};P_{EMAX}]$) définissant une plage de variation de puissance ($\Delta P_E$) autour d'une puissance moyenne ($P_{E\emptyset}$), procédé **caractérisé par le fait que** :

- l'on établit une fonction de transfert optique (FT) dont la représentation graphique dans un diagramme « puissance d'entrée ($P_E$) - puissance de sortie ($P_S$) » présente au moins une portion sensiblement monotone (A), qui définit un seuil de puissance d'entrée ($P_{ES}$) pour lequel le prolongement (T) de la portion sensiblement monotone (A) engendre une puissance de sortie nulle,

- l'on agence ladite portion sensiblement monotone (A) et l'intervalle de puissance ($[P_{EMIN};P_{EMAX}]$) de manière :

o que ladite portion sensiblement monotone (A) enveloppe sensiblement au moins la partie de l'intervalle de puissance ($[P_{EMIN};P_{EMAX}]$) pour laquelle la densité de probabilité de puissance ($LDP_E$) est élevée, et

o que ledit seuil de puissance ($P_{ES}$) soit hors dudit intervalle de puissance ($[P_{EMIN};P_{EMAX}]$) et présente un écart à la puissance moyenne ($P_{E\emptyset}$) qui soit sensiblement inférieur à ladite puissance moyenne ($P_{E\emptyset}$), et

- l'on applique ladite portion sensiblement monotone (A) à au moins une partie temporelle dudit signal optique (TE) en vue d'amplifier optiquement la variation relative de puissance ($G_E$) de ladite partie temporelle.

2. Procédé selon la revendication 1, dans lequel, le signal optique (TE) se présentant sous la forme d'un train d'impulsions (E), l'on amplifie optiquement la variation relative de puissance ($G_E$) entre au moins deux desdites impulsions (E).

3. Procédé selon la revendication 1 ou 2, dans lequel, en vue d'une mesure ultérieure du signal optique (TE), on applique ladite portion sensiblement monotone (A) à au moins une partie temporelle dudit signal optique (TE) en vue d'amplifier optiquement la variation relative de puissance ($G_E$) de ladite partie temporelle afin que la variation relative de puissance ($G_S$) amplifiée surpasse le bruit ($G_{ELECTRONIQUE}$) généré par la mesure ultérieure.

4. Procédé selon l'une des revendications 1 à 3, dans lequel la portion sensiblement monotone (A) de la représentation graphique de la fonction de transfert (FT) enveloppe sensiblement l'intervalle de puissance ($[P_{EMIN};P_{EMAX}]$).

5. Procédé selon la revendication 4, dans lequel la portion sensiblement monotone (A) de la représentation graphique de la fonction de transfert (FT) est sensiblement croissante sur l'intervalle de puissance ($[P_{EMIN};P_{EMAX}]$).

6. Procédé selon l'une des revendications précédentes, dans lequel la portion sensiblement monotone (A) de la représentation graphique de la fonction de transfert (FT) est sensiblement linéaire sur l'intervalle de puissance ($[P_{EMIN};P_{EMAX}]$).

7. Procédé selon l'une des revendications précédentes, dans lequel le seuil de puissance d'entrée ($P_{ES}$) est sensiblement proche de l'intervalle de puissance ($[P_{EMIN};P_{EMAX}]$).

8. Procédé selon l'une des revendications précédentes, dans lequel, après amplification optique de la variation relative de puissance ($G_E$) d'au moins une partie temporelle du signal optique (TE), la puissance ($P_S$) de celle-ci est mesurée électroniquement en vue d'analyser les variations de puissance dudit signal optique (TE).

**9.** Procédé selon la revendication 8, dans lequel :

- l'on mesure d'abord électroniquement la puissance ($P_E$) d'au moins une partie temporelle du signal optique (TE),
- l'on en déduit la variation relative de puissance ($G_E$) dudit signal optique (TE),
- l'on compare ladite variation relative de puissance ($G_E$) ainsi déduite avec le bruit de mesure électronique ($G_{ELECTRONIQUE}$), et
- en fonction du résultat de ladite comparaison, l'on amplifie optiquement la variation relative de puissance ($G_E$) d'au moins une partie temporelle dudit signal optique (TE) afin que la variation relative de puissance ($G_S$) amplifiée surpasse le bruit de mesure électronique ($G_{ELECTRONIQUE}$), puis l'on mesure électroniquement la puissance ($P_S$) de ladite partie temporelle.

**10.** Dispositif (1) pour la mise en oeuvre du procédé d'amplification d'un signal optique (TE) selon l'une des revendications 1 à 9, dispositif (1) comportant :

- des moyens (2,3) pour établir une fonction de transfert optique (FT) dont la représentation graphique dans un diagramme puissance optique d'entrée ($P_E$) - puissance optique de sortie ($P_S$) présente au moins une portion sensiblement monotone (A), qui définit un seuil de puissance d'entrée ($P_{ES}$) pour lequel le prolongement (T) de la portion sensiblement monotone (A) engendre une puissance de sortie nulle, et
- des moyens pour appliquer ladite portion sensiblement monotone (A) à au moins une partie temporelle dudit signal optique (TE) en vue d'amplifier optiquement la variation relative de puissance ($G_E$) de ladite partie temporelle.

**11.** Dispositif (1) selon la revendication 10, dans lequel les moyens (2,3) pour établir la fonction de transfert optique (FT) comprennent au moins un élément optique (2) présentant des propriétés optiques non-linéaires.

**12.** Dispositif (1) selon la revendication 10 ou 11, disposé en amont d'un dispositif (5) de mesure électronique de la puissance ($P_S$) du signal optique (TS), en vue d'analyser, après amplification optique de la variation relative de puissance ($G_E$) d'au moins une partie temporelle dudit signal optique (TE), les variations de puissance dudit signal optique (TE).

**13.** Dispositif (1) selon la revendication 12, pour lequel la puissance aléatoire ($P_E$) du signal optique (TE) est comprise dans un intervalle de puissance ($[P_{EMIN};P_{EMAX}]$), dispositif (1) disposé en aval d'un amplificateur optique (9), l'amplificateur (9) étant en liaison avec le dispositif (5) de mesure électronique par l'intermédiaire d'un contrôleur électronique (10) en vue d'ajuster l'intervalle de puissance ($[P_{EMIN};P_{EMAX}]$) dudit signal optique (TE), par rapport à la portion sensiblement monotone (A), en fonction d'une mesure électronique préalable de la puissance ($P_S$) d'au moins une partie dudit signal optique (TS) dont la variation relative de puissance ($G_E$) a été amplifiée.

**14.** Procédé de détection d'une espèce chimique dans un échantillon, selon lequel :

- on envoie sur l'échantillon un signal optique (TE) à variation relative de puissance nulle, afin de faire interagir ledit signal optique (TE) avec ledit échantillon ; et
- on mesure la variation relative de puissance ($G_E$) dudit signal optique (TE), après interaction avec ledit échantillon, en vue de détecter la présence de ladite espèce chimique, ladite mesure de variation relative générant un bruit de mesure ($G_{ELECTRONIQUE}$), procédé **caractérisé par le fait qu'**on applique au signal optique (TE), après interaction avec ledit échantillon et préalablement à la mesure de ladite variation relative de puissance ($G_E$), le procédé de traitement selon l'une des revendications 1 à 9, afin que la variation relative de puissance (Gs) amplifiée dudit signal optique (TE) après interaction surpasse ledit bruit de mesure ($G_{ELECTRONIQUE}$).

**Patentansprüche**

**1.** Verfahren zum Verarbeiten eines optischen Signals (TE), dessen Leistung ($P_E$) sich zufällig ändert und durch ein Gesetz der Wahrscheinlichkeitsdichte der Leistung ($LDP_E$) bestimmt wird, die in einem Leistungsintervall ($[P_{EMIN}; P_{EMAX}]$) liegt, das einen Leistungsänderungsbereich ($\Delta P_E$) um eine mittlere Leistung ($P_{E\emptyset}$) herum definiert, wobei das Verfahren **dadurch gekennzeichnet ist, dass**

- eine optische Übertragungsfunktion (FT) aufgestellt wird, deren graphische Darstellung in einem Eingangsleistung ($P_E$)/Ausgangsleistung ($P_S$)-Diagramm mindestens einen im Wesentlichen monotonen Abschnitt (A) aufweist, der einen Schwellenwert für die Eingangsleistung ($P_{ES}$) definiert, bei dem die Verlängerung (T) des im Wesentlichen monotonen Abschnitts (A) eine Ausgangsleistung gleich Null erzeugt,
- der im Wesentlichen monotone Abschnitt (A) und das Leistungsintervall ($[P_{EMIN}; P_{EMAX}]$) so angeordnet werden,

  ◦ dass der im Wesentlichen monotone Abschnitt (A) mindestens den Teil des Leistungsintervalls ($[P_{EMIN}; P_{EMAX}]$) im Wesentlichen umschließt, bei dem die Wahrscheinlichkeitsdichte der Leistung (LDPE) erhöht ist, und

◦ dass der Schwellenwert für die Leistung ($P_{ES}$) außerhalb des Leistungsintervalls ($[P_{EMIN}; P_{EMAX}]$) liegt und eine Abweichung von der mittleren Leistung ($P_{E\emptyset}$) aufweist, die im Wesentlichen kleiner als die mittlere Leistung ($P_{E\emptyset}$) ist, und

- der im Wesentlichen monotone Abschnitt (A) auf mindestens einen zeitlichen Abschnitt des optischen Signals (TE) angewendet wird, um die relative Leistungsänderung ($G_E$) des zeitlichen Abschnitts optisch zu verstärken.

2. Verfahren nach Anspruch 1, bei dem, da das optische Signal (TE) die Form einer Impulsfolge (E) aufweist, die relative Leistungsänderung ($G_E$) zwischen mindestens zwei der Impulse (E) optisch verstärkt wird.

3. Verfahren nach Anspruch 1 oder 2, bei dem, für eine weitere Messung des optischen Signals (TE), der im Wesentlichen monotone Abschnitt (A) auf mindestens einen zeitlichen Abschnitt des optischen Signals (TE) angewendet wird, um die relative Leistungsänderung ($G_E$) des zeitlichen Abschnitts optisch zu verstärken, damit die verstärkte relative Leistungsänderung ($G_S$) das durch die weitere Messung erzeugte Rauschen ($G_{ELECTRONIQUE}$) übersteigt.

4. Verfahren nach einem der Ansprüche 1 bis 3, bei dem der im Wesentlichen monotone Abschnitt (A) der graphischen Darstellung der Übertragungsfunktion (FT) das Leistungsintervall ($[P_{EMIN}; P_{EMAX}]$) im Wesentlichen umschließt.

5. Verfahren nach Anspruch 4, bei dem der im Wesentlichen monotone Abschnitt (A) der graphischen Darstellung der Übertragungsfunktion (FT) über das Leistungsintervall ($[P_{EMIN}; P_{EMAX}]$) im Wesentlichen ansteigt.

6. Verfahren nach einem der vorhergehenden Ansprüche, bei dem der im Wesentlichen monotone Abschnitt (A) der graphischen Darstellung der Übertragungsfunktion (FT) über das Leistungsintervall ($[P_{EMIN}; P_{EMAX}]$) im Wesentlichen linear ist.

7. Verfahren nach einem der vorhergehenden Ansprüche, bei dem der Schwellenwert für die Eingangsleistung ($P_{ES}$) sich im Wesentlichen dem Leistungsintervall ($[P_{EMIN}; P_{EMAX}]$) annähert.

8. Verfahren nach einem der vorhergehenden Ansprüche, bei dem, nach optischer Verstärkung der relativen Leistungsänderung ($G_E$) mindestens eines zeitlichen Abschnitts des optischen Signals (TE), dessen Leistung ($P_S$) elektronisch gemessen wird, um die Leistungsänderungen des optischen Signals (TE) zu analysieren.

9. Verfahren nach Anspruch 8, bei dem

- zunächst die Leistung ($P_E$) mindestens eines zeitlichen Abschnitts des optischen Signals (TE) elektronisch gemessen wird,
- daraus die relative Leistungsänderung ($G_E$) des optischen Signals (TE) abgeleitet wird,
- die somit abgeleitete relative Leistungsänderung ($G_E$) mit dem elektronischen Messrauschen ($G_{ELECTRONIQUE}$) verglichen wird, und

in Abhängigkeit von dem Ergebnis des Vergleichs, die relative Leistungsänderung ($G_E$) mindestens eines zeitlichen Abschnitts des optischen Signals (TE) optisch verstärkt wird, damit die verstärkte relative Leistungsänderung ($G_S$) das elektronische Messrauschen ($G_{ELECTRONIQUE}$) übersteigt und dann die Leistung ($P_S$) des zeitlichen Abschnitts elektronisch gemessen wird.

10. Vorrichtung (1) für die Durchführung des Verfahrens zum Verstärken eines optischen Signals (TE) nach einem der Ansprüche 1 bis 9, wobei die Vorrichtung (1) Folgendes aufweist:

- Mittel (2, 3) zum Aufstellen einer optischen Übertragungsfunktion (FT), deren graphische Darstellung in einem optischen Eingangsleistung ($P_E$)/optischen Ausgangsleistung ($P_S$)-Diagramm mindestens einen im Wesentlichen monotonen Abschnitt (A) aufweist, der einen Schwellenwert für die Eingangsleistung ($P_{ES}$) definiert, bei dem die Verlängerung (T) des im Wesentlichen monotonen Abschnitts (A) eine Ausgangsleistung gleich Null erzeugt, und
- Mittel zum Anwenden des im Wesentlichen monotonen Abschnitts (A) auf mindestens einen zeitlichen Abschnitt des optischen Signals (TE), um die relative Leistungsänderung ($G_E$) des zeitlichen Abschnitts optisch zu verstärken.

11. Vorrichtung (1) nach Anspruch 10, wobei die Mittel (2, 3) zum Aufstellen der optischen Übertragungsfunktion (FT) mindestens ein optisches Element (2) umfassen, das nichtlineare optische Eigenschaften aufweist.

12. Vorrichtung (1) nach Anspruch 10 oder 11, die vor einer Vorrichtung (5) zum elektronischen Messen der Leistung ($P_S$) des optischen Signals (TS) angeordnet ist, um, nach optischer Verstärkung der relativen Leistungsänderung ($G_E$) mindestens eines zeitlichen Abschnitts des optischen Signals (TE), die Leistungsänderungen des optischen Signals (TE) zu analysieren.

13. Vorrichtung (1) nach Anspruch 12, wobei die zufällige Leistung ($P_E$) des optischen Signals (TE) in einem Leistungsintervall ([$P_{EMIN}$; $P_{EMAX}$]) liegt, wobei die Vorrichtung (1) hinter einem optischen Verstärker (9) angeordnet ist, wobei der Verstärker (9) mit der Vorrichtung (5) zum elektronischen Messen über einen elektronischen Controller (10) verbunden ist, um das Leistungsintervall ([$P_{EMIN}$; $P_{EMAX}$]) des optischen Signals (TE) relativ zu dem im Wesentlichen monotonen Abschnitt (A) in Abhängigkeit von einer vorherigen elektronischen Messung der Leistung ($P_S$) mindestens eines Teils des optischen Signals (TS) anzupassen, deren relative Leistungsänderung ($G_E$) verstärkt wurde.

14. Verfahren zum Detektieren einer chemischen Gattung in einer Probe, bei dem

   - in die Probe ein optisches Signal (TE) mit relativer Leistungsänderung gleich Null gesendet wird, damit das optische Signal (TE) mit der Probe in Interaktion gebracht wird; und
   - die relative Leistungsänderung ($G_E$) des optischen Signals (TE) nach Interaktion mit der Probe gemessen wird, um das Vorhandensein der chemischen Gattung zu detektieren, wobei die Messung der relativen Leistungsänderung ein Messrauschen ($G_{ELECTRONIQUE}$) erzeugt,

   wobei das Verfahren **dadurch gekennzeichnet ist, dass** auf das optische Signal (TE) nach Interaktion mit der Probe und vor der Messung der relativen Leistungsänderung ($G_E$) das Verarbeitungsverfahren nach einem der Ansprüche 1 bis 9 angewendet wird, damit die verstärkte relative Leistungsänderung ($G_S$) des optischen Signals (TE) nach Interaktion das Messrauschen ($G_{ELECTRONIQUE}$) übersteigt.

**Claims**

1. Method for processing an optical signal (TE) whose power ($P_E$) varies in a random manner and is determined by a power probability density law ($LDP_E$) which is included in a power range ([$P_{EMIN}$;$P_{EMAX}$]) which defines a power variation range ($\Delta P_E$) around a mean power ($P_{EØ}$), which method is **characterised in that**:

   - an optical transfer function (FT) is established whose graphical representation in a graph "input power ($P_E$) - output power ($P_S$)" has at least a substantially monotonic portion (A) which defines an input power threshold ($P_{ES}$) for which the extension (T) of the substantially monotonic portion (A) produces zero output power,
   - the substantially monotonic portion (A) and the power range ([$P_{EMIN}$;$P_{EMAX}$]) are arranged in such a manner that:

      • said substantially monotonic portion (A) includes substantially at least the portion of the power range ([$P_{EMIN}$;$P_{EMAX}$]) for which the power probability density ($LDP_E$) is high and
      • said power threshold ($P_{ES}$) is outside the power range ([$P_{EMIN}$;$P_{EMAX}$]) and has a mean power deviation ($P_{EØ}$) which is substantially less than said mean power ($P_{EØ}$) and

   - said substantially monotonic portion (A) is applied to at least one temporal portion of the optical signal (TE) in order to optically amplify the relative power variation ($G_E$) of said temporal portion.

2. Method according to claim 1, wherein, the optical signal (TE) being in the form of a train of pulses (E), the relative power variation ($G_E$) is optically amplified between at least two of said pulses (E).

3. Method according to claim 1 or 2, wherein, for a subsequent measurement of the optical signal (TE), the substantially monotonic portion (A) is applied to at least one temporal portion of the optical signal (TE) in order to optically amplify the relative power variation ($G_E$) of said temporal portion in such a way that the amplified relative power variation ($G_S$) exceeds the noise ($G_{ELECTRONIC}$) produced by the subsequent measurement.

4. Method according to any one of claims 1 to 3, wherein the substantially monotonic portion (A) of the graphical representation of the transfer function (FT) substantially includes the power range ([$P_{EMIN}$;$P_{EMAX}$]).

5. Method according to claim 4, wherein the substantially monotonic portion (A) of the graphical representation of the transfer function (FT) substantially increases over the power range ([$P_{EMIN}$;$P_{EMAX}$]).

6. Method according to any one of the preceding claims, wherein the substantially monotonic portion (A) of the graphical representation of the transfer function (FT) is substantially linear over the power range ([$P_{EMIN}$;$P_{EMAX}$]).

7. Method according to any one of the preceding claims, wherein the input power threshold ($P_{ES}$) is substantially close to the power range ($[P_{EMIN};P_{EMAX}]$).

8. Method according to any one of the preceding claims, wherein, after optical amplification of the relative power variation ($G_E$) of at least one temporal portion of the optical signal (TE), the power ($P_S$) thereof is measured electronically in order to analyse the power variations of said optical signal (TE).

9. Method according to claim 8, wherein:

   - first, the power ($P_E$) of at least one temporal portion of the optical signal (TE) is measured electronically,
   - the relative power variation ($G_E$) of said optical signal (TE) is derived therefrom,
   - said relative power variation ($G_E$) derived in that manner is compared with said electronic measurement noise ($G_{ELECTRONIC}$), and,
   - in accordance with the result of said comparison, the relative power variation ($G_E$) of at least one temporal portion of said optical signal (TE) is amplified optically in such a way that the amplified relative power variation ($G_S$) exceeds the electronic measurement noise ($G_{ELECTRONIC}$), then the power ($P_S$) of said temporal portion is measured electronically.

10. Device (1) for carrying out the method for amplifying an optical signal (TE) according to any one of claims 1 to 9, which device (1) comprises:

    - means (2, 3) for establishing an optical transfer function (FT) whose graphical representation in a graph "optical input power ($P_E$) - optical output power ($P_S$)" has at least a substantially monotonic portion (A) which defines an input power threshold ($P_{ES}$) for which the extension (T) of the substantially monotonic portion (A) produces zero output power and
    - means for applying said substantially monotonic portion (A) to at least one temporal portion of the optical signal (TE) in order to optically amplify the relative power variation ($G_E$) of said temporal portion.

11. Device (1) according to claim 10, wherein the means (2, 3) for establishing the optical transfer function (FT) comprise at least one optical element (2) having non-linear optical properties.

12. Device (1) according to claim 10 or 11, which is arranged upstream of a device (5) for electronically measuring the power ($P_S$) of the optical signal (TS) in order to analyse, after optical amplification of the relative power variation ($G_E$) of at least one temporal portion of the optical signal (TE), the power variations of said optical signal (TE).

13. Device (1) according to claim 12, for which the random power ($P_E$) of the optical signal (TE) is included in a power range ($[P_{EMIN};P_{EMAX}]$), which device (1) is arranged downstream of an optical amplifier (9), the amplifier (9) being connected to the electronic measurement device (5) by means of an electronic controller (10) in order to adjust the power range ($[P_{EMIN};P_{EMAX}]$) of the optical signal (TE) in relation to the substantially monotonic portion (A) in accordance with a previous electronic measurement of the power ($P_S$) of at least one portion of said optical signal (TS) whose relative power variation ($G_E$) has been amplified.

14. Method for detecting a chemical species in a sample, according to which:

    - an optical signal (TE) having zero relative power variation is transmitted to the sample in order to cause said optical signal (TE) to interact with said sample; and
    - the relative power variation ($G_E$) of said optical signal (TE) is measured after interaction with said sample in order to detect the presence of said chemical species, said relative variation measurement producing a measurement noise ($G_{ELECTRONIC}$),

    which method is **characterised in that** the processing method according to any one of claims 1 to 9 is applied to the optical signal (TE) after interaction with said sample and before the measurement of said relative power variation ($G_E$) in such a way that the amplified relative power variation ($G_S$) of the optical signal (TE) after interaction exceeds said measurement noise ($G_{ELECTRONIC}$).

## Figure 1

(A)

(B)

## Figure 2

# Figure 3

## Figure 4

(A)

(B)

## Figure 5

# Figure 6

# Figure 7

(A)                                                                (B)

## Figure 8

## Figure 9

# Figure 10

(A)

$P_S = FT(P_E)$

C

$P_E$

$P_{E\emptyset}$

$LDP_E$

$\Delta P_E$

(B)

$P_S = FT(P_E)$

C

$P_E$

$P_{E\emptyset}$

$LDP_E$

$\Delta P_E$

(C)

$P_S = FT(P_E)$

T

C

$P_E$

$P_{E\emptyset}$

$LDP_E$

$\Delta P_E$

(D)

$P_S = FT(P_E)$

T

C

$P_E$

$P_{E\emptyset}$

$LDP_E$

$\Delta P_E$

## RÉFÉRENCES CITÉES DANS LA DESCRIPTION

**Documents brevets cités dans la description**

- US 20030095304 A

- US 2005220388 A

**Littérature non-brevet citée dans la description**

- **D. VON DER LINDE.** Characterization of the noise in continuously operating mode-locked lasers. *Appl. Phys. B,* 1986, vol. 39, 201-217

- **J. FATOME et al.** All-optical measurements of background, amplitude, and timing jitters for high speed pulse trains or PRBS sequences usine autocorrelation function. *Opt. Fiber. Technol.,* 2007, 84-91